# EUROPÄISCHE PATENTSCHRIFT

(11) **EP 3 080 310 B1**
(45) Veröffentlichungstag und Bekanntmachung des Hinweises auf die Patenterteilung: **28.11.2018**
(21) Anmeldenummer: 14821499.2
(22) Anmeldetag: 11.12.2014
(51) Int. Cl.: C21B 5/06, C21B 7/00, C21B 5/00, C21C 5/28, F27D 17/00

(54) **ANLAGENVERBUND ZUR STAHLERZEUGUNG UND VERFAHREN ZUM BETREIBEN DES ANLAGENVERBUNDES**
COMBINED SYSTEM FOR PRODUCING STEEL AND METHOD FOR OPERATING THE COMBINED SYSTEM
RÉSEAU D'INSTALLATIONS POUR LA PRODUCTION D'ACIER ET PROCÉDÉ POUR FAIRE FONCTIONNER CE RÉSEAU D'INSTALLATIONS

(30) Priorität: 12.12.2013 DE 102013113950
(43) Veröffentlichungstag der Anmeldung: 19.10.2016
(73) Patentinhaber: thyssenkrupp AG, 45143 Essen (DE)
(72) Erfinder: ACHATZ, Reinhold, 45259 Essen (DE); WAGNER, Jens, 60439 Frankfurt a.M. (DE); OLES, Markus, 45525 Hattingen (DE); SCHMÖLE, Peter, 44141 Dortmund (DE); KLEINSCHMIDT, Ralph, 45472 Mülheim a.d.R. (DE); MEISSNER, Christoph, 44135 Dortmund (DE); BREDEMEYER, Niels, 45731 Waltrop (DE); VÖLKL, Johannes, 65779 Kelkheim (DE)
(74) Vertreter: thyssenkrupp Intellectual Property GmbH
(86) Internationale Anmeldenummer: PCT/EP2014/003318
(87) Internationale Veröffentlichungsnummer: WO 2015/086152

(56) Entgegenhaltungen:
- EP-A1- 2 657 215
- WO-A1-2011/018124
- DE-A1-102011 077 819
- SCHMOELE P ET AL: "ECOLOGICAL HOT METAL PRODUCTION USING COKE PLANT AND BLAST FURNACE ROUTE//PRODUCTION ECOLOGIQUE DE FONTE PAR LA FILIERE COKERIE ET HAUT-FOURNEAU", REVUE DE METALLURGIE - CAHIERS D'INFORMATIONS TECHNIQUES, REVUE DE METALLURGIE. PARIS, FR, Bd. 102, Nr. 3, 1. März 2005 (2005-03-01), Seiten 171-182, XP001230940, ISSN: 0035-1563, DOI: 10.1051/METAL:2005140

## Beschreibung

Die Erfindung betrifft einen Anlagenverbund zur Stahlerzeugung sowie ein Verfahren zum Betreiben des Anlagenverbundes.

Der Anlagenverbund zur Stahlerzeugung umfasst zumindest einen Hochofen zur Roheisenerzeugung, ein Konverterstahlwerk zur Rohstahlerzeugung und ein Gasleitungssystem für Gase, die bei der Roheisenerzeugung und/oder der Rohstahlerzeugung anfallen. Der Anlagenverbund kann ferner ein Kraftwerk zur Stromerzeugung aufweisen, welches als Gasturbinenkraftwerk oder Gasturbinen- und Dampfturbinenkraftwerk ausgelegt ist und mit einem Gas betrieben wird, das zumindest eine Teilmenge des bei der Roheisenerzeugung im Hochofen anfallenden Hochofengichtgases und/oder eine Teilmenge des in dem Konverterstahlwerk anfallenden Konvertergases umfasst.

Im Hochofen wird aus Eisenerzen, Zuschlägen sowie Koks und anderen Reduktionsmitteln wie Kohle, Öl, Gas, Biomassen, aufbereiteten Altkunststoffen oder sonstigem Kohlenstoff und/oder Wasserstoff enthaltenden Stoffen Roheisen gewonnen. Als Produkte der Reduktionsreaktionen entstehen zwangsläufig CO, CO₂, Wasserstoff und Wasserdampf. Ein aus dem Hochofenprozess abgezogenes Hochofengichtgas weist neben den vorgenannten Bestandteile häufig einen hohen Gehalt an Stickstoff auf. Die Gasmenge und die Zusammensetzung des Hochofengichtgases ist abhängig von den Einsatzstoffen und der Betriebsweise und unterliegt Schwankungen. Typischerweise enthält Hochofengichtgas jedoch 35 bis 60 Vol.-% N₂, 20 bis 30 Vol.-% CO, 20 bis 30 Vol.-% CO₂ und 2 bis 15 Vol.-% H₂. Rund 30 bis 40% des bei der Roheisenerzeugung entstehenden Hochofengichtgases wird im Regelfall zum Aufheizen des Heißwindes für den Hochofenprozess in Winderhitzern eingesetzt; die verbleibende Gichtgasmenge kann in anderen Werksbereichen extern zu Heizzwecken oder zur Stromerzeugung genutzt werden.

Im Konverterstahlwerk, das dem Hochofenprozess nachgeschaltet ist, wird Roheisen zu Rohstahl umgewandelt. Durch Aufblasen von Sauerstoff auf flüssiges Roheisen werden störende Verunreinigungen wie Kohlenstoff, Silizium, Schwefel und Phosphor entfernt. Da die Oxidationsprozesse eine starke Wärmeentwicklung verursachen, wird häufig Schrott in Mengen bis zu 25% bezogen auf das Roheisen als Kühlmittel zugesetzt. Ferner werden Kalk zur Schlackenbildung und Legierungsmittel zugegeben. Aus dem Stahlkonverter wird ein Konvertergas abgezogen, welches einen hohen Gehalt an CO aufweist und ferner Stickstoff, Wasserstoff und CO₂ enthält. Eine typische Konvertergaszusammensetzung weist 50 bis 70 Vol.-% CO, 10 bis 20 Vol.-% N₂, ca. 15 Vol.-% CO₂ und ca. 2 Vol.-% H₂ auf. Das Konvertergas wird entweder abgefackelt oder bei modernen Stahlwerken aufgefangen und einer energetischen Nutzung zugeführt.

Der Anlagenverbund kann optional im Verbund mit einer Kokerei betrieben werden. In diesem Fall umfasst der eingangs beschriebene Anlagenverbund zusätzlich eine Koksofenanlage, in der Kohle durch einen Verkokungsprozess in Koks umgewandelt wird. Bei der Verkokung von Kohle zu Koks fällt ein Koksofengas an, welches einen hohen Wasserstoffgehalt und beachtliche Mengen an CH₄ enthält. Typischerweise enthält Koksofengas 55 bis 70 Vol.-% H₂, 20 bis 30 Vol.-% CH₄, ca. 10 Vol.-% N₂ und 5 bis 10 Vol.-% CO. Zusätzlich weist das Koksofengas Anteile von CO₂, NH₃ und H₂S auf. In der Praxis wird das Koksofengas in verschiedenen Werksbereichen zu Heizzwecken und im Kraftwerksprozess zur Stromerzeugung genutzt. Darüber hinaus ist es bekannt, Koksofengas zusammen mit Hochofengichtgas oder mit Konvertergas zur Erzeugung von Synthesegasen zu verwenden. Gemäß einem aus WO 2010/136313 A1 bekannten Verfahren wird Koksofengas aufgetrennt in einen wasserstoffreichen Gasstrom und einen CH₄ und CO enthaltenen Restgasstrom, wobei der Restgasstrom dem Hochofenprozess zugeführt wird und der wasserstoffreiche Gasstrom mit Hochofengichtgas gemischt und zu einem Synthesegas weiterverarbeitet wird. Aus EP 0 200 880 A2 ist es bekannt, Konvertergas und Koksofengas zu mischen und als Synthesegas für eine Methanolsynthese zu nutzen.

In einem integrierten Hüttenwerk, wie beispielsweise in "Ecological Hot Metal Production Using Coke Plant and Blast Furnace Route" (La Revue Metallurgique CIT, 03-2005) beschrieben, welches im Verbund mit einer Kokerei betrieben wird, werden etwa 40 bis 50% der als Hochofengichtgas, Konvertergas und Koksofengas anfallenden Rohgase für verfahrenstechnische Prozesse eingesetzt. Etwa 50 bis 60% der entstehenden Gase werden einem Kraftwerk zugeführt und zur Stromerzeugung genutzt. Der im Kraftwerk erzeugte Strom deckt den Strombedarf für die Roheisen- und Rohstahlerzeugung. Im Idealfall ist die Energiebilanz geschlossen, so dass abgesehen von Eisenerzen und Kohlenstoff in Form von Kohle und Koks als Energieträger kein weiterer Eintrag von Energie notwendig ist und außer Rohstahl und Schlacke kein Produkt den Anlagenverbund verlässt.

Vor diesem Hintergrund liegt der Erfindung die Aufgabe zugrunde, die Wirtschaftlichkeit des Gesamtprozesses weiter zu verbessern und einen Anlagenverbund anzugeben, mit dem es möglich ist, die Kosten für die Stahlerzeugung zu reduzieren. Außerdem wird angestrebt, die CO₂-Emissionen bei der Rohstahlerzeugung zu reduzieren.

Ausgehend von einem Anlagenverbund zur Stahlerzeugung mit einem Hochofen zur Roheisenerzeugung, einem Konverterstahlwerk zur Rohstahlerzeugung und einem Gasleitungssystem für Gase, die bei der Roheisenerzeugung und/oder der Rohstahlerzeugung anfallen, ist erfindungsgemäß vorgesehen, dass der Anlagenverbund zusätzlich eine an das Gasleitungssystem angeschlossene Chemieanlage oder Biotechnologieanlage sowie einen Energiespeicher zur Deckung zumindest eines Teils des Strombedarfes des Anlagenverbundes aufweist. Vorteilhafte Ausgestaltungen des erfindungsgemäßen Anlagenverbundes werden in den Patentansprüchen 2 und 3 beschrieben.

Gegenstand der Erfindung ist auch ein Verfahren nach Anspruch 4 zum Betreiben eines Anlagenverbundes zur Stahlerzeugung, der zumindest einen Hochofen zur Roheisenerzeugung, ein Konverterstahlwerk und eine Chemieanlage oder Biotechnologieanlage aufweist. Gemäß dem erfindungsgemäßen Verfahren wird zunächst eine Teilmenge eines bei der Roheisenerzeugung im Hochofen anfallenden Hochofengichtgases und/oder eine Teilmenge eines bei der Rohstahlerzeugung anfallenden Konvertergases nach einer Gaskonditionierung als Nutzgas zur Herstellung chemischer Produkte verwendet oder nach einer Gaskonditionierung der Biotechnologieanlage zugeführt und für biochemische Prozesse genutzt. Um zumindest einen Teil des Strombedarfs des Anlagenverbundes zu decken, ist ein Energiespeicher vorgesehen. Der Energiespeicher wird mit Strom gespeist, der zumindest teilweise aus erneuerbarer Energie erzeugt wurde und die gespeicherte Energie zeitversetzt an elektrische Verbraucher des Anlagenverbundes wieder abgibt.

Das Angebot an Strom aus erneuerbarer Energie, beispielsweise aus Solaranlagen oder Windkraftanlagen, unterliegt zeitlichen Schwankungen. In Zeiten, in denen Strom aus erneuerbarer Energie in ausreichender Menge und zu günstigen Preisen erhältlich ist, wird der Energiespeicher aufgeladen, so dass bei einem knappen Stromangebot und in Zeiten hoher Strompreise genügend Strom aus dem Energiespeicher zum Betrieb des Anlagenverbundes entnommen werden kann. Die Einbindung des Energiespeichers in den Anlagenverbund ermöglicht eine gleichmäßige Produktion von Roheisen und Rohstahl sowie einen kontinuierlichen Betrieb der im Verbund mit Anlagen zur Roheisenerzeugung und Rohstahlerzeugung betriebenen Chemieanlage oder Biotechnologieanlage. Durch den erfindungsgemäßen Anlagenverbund kann sichergestellt werden, dass der Chemieanlage oder Biotechnologieanlage ein im Wesentlichen gleichmäßiger Gasstrom, der bei der Roheisenerzeugung und/oder Rohstahlerzeugung anfällt, als Feed zur Verfügung steht. Im Vergleich zu dem eingangs erläuterten Stand der Technik, bei dem 50 bis 60 % der als Hochofengichtgas, Konvertergas und ggf. Koksofengas anfallenden Rohgase in einem Kraftwerk zur Stromerzeugung genutzt wird, kann durch das erfindungsgemäße Verfahren die CO₂-Emission reduziert werden, wenn die Gase nicht verbrannt, sondern durch chemische Reaktionen oder biochemische Prozesse in höherwertige Produkte umgewandelt werden. Der ökologische Nutzen ist umso größer, je mehr Strom aus erneuerbarer Energie zur Speisung des Energiespeichers und der Versorgung der elektrischen Verbraucher eingesetzt wird. Die Erfindung macht sich dabei auch zu Nutze, dass der Wirkungsgrad einer Chemieanlage, in der die bei der Roheisenerzeugung und/oder Rohstahlerzeugung anfallenden Gase in Chemieprodukte umgewandelt werden, deutlich größer ist als der Wirkungsgrad eines Kraftwerksprozesses, in dem die Rohgase zur Stromerzeugung genutzt werden.

Ein Kraftwerk zur Stromversorgung des Anlagenverbundes kann als Stand-by-Kraftwerk eingesetzt werden, um eine Stromversorgung des Anlagenverbundes sicherzustellen, wenn die Chemieanlage oder Biotechnologieanlage außer Betrieb ist oder die gespeicherte Energie nicht ausreicht, um die Produktionsanlagen zur Roheisenerzeugung und Rohstahlerzeugung mit der gewünschten Leistung zu betreiben.

In der Chemieanlage können chemische Produkte aus Synthesegasen erzeugt werden, welches jeweils die Komponenten des Endproduktes enthalten. Chemische Produkte können beispielsweise Ammoniak oder Methanol oder auch andere Kohlenwasserstoffverbindungen sein.

Zur Herstellung von Ammoniak muss ein Synthesegas bereitgestellt werden, welches Stickstoff und Wasserstoff im richtigen Verhältnis enthält. Der Stickstoff kann aus Hochofengichtgas gewonnen werden. Als Wasserstoffquelle kann Hochofengichtgas oder Konvertergas verwendet werden, wobei Wasserstoff durch Konvertierung des CO-Anteils durch eine Wasser-Gas-Shift-Reaktion (CO + H₂O ⇄ CO₂ + H₂) erzeugt wird. Zur Herstellung von Kohlenwasserstoffverbindungen, beispielsweise Methanol, muss ein im Wesentlichen aus CO und/oder Kohlendioxid und H₂ bestehendes Synthesegas bereitgestellt werden, welches die Komponenten Kohlenmonoxid und/oder Kohlendioxid und Wasserstoff im richtigen Verhältnis enthält. Da Verhältnis wird häufig durch das Modul (H₂ - CO₂) / (CO + CO₂) beschrieben. Der Wasserstoff kann beispielsweise durch Konvertierung des CO-Anteils im Hochofengichtgas durch eine Wasser-Gas-Shift-Reaktion erzeugt werden. Zur Bereitstellung von CO kann Konvertergas herangezogen werden. Als CO₂-Quellen kann Hochofengichtgas und/oder Konvertergas dienen.

Bei den vorstehend beschriebenen Konzepten kann allerdings der C-Gehalt bzw. N-Gehalt des Mischgases nicht vollständig genutzt werden, da ein Wasserstoff-Unterschuss vorliegt. Um den C-Gehalt bzw. N-Gehalt der bei der Roheisenerzeugung und/oder der Rohstahlerzeugung anfallenden Gase vollständig für die Herstellung von chemischen Produkten nutzen zu können, wird gemäß der Erfindung Wasserstoff zudosiert, der in einer Anlage zur Wasserstofferzeugung gebildet wird. Die Wasserstofferzeugung erfolgt durch Wasserelektrolyse, wobei die Wasserelektrolyse mit elektrischem Strom aus regenerativen Quellen betrieben werden kann. Die Elektrolyseanlage ist mit dem Energiespeicher elektrisch verbunden und wird zumindest ein Teil der für die Wasserelektrolyse notwendigen elektrischen Energie dem Energiespeicher entnommen. Bei der Wasserelektrolyse entsteht auch Sauerstoff, der im Hochofen zur Roheisenerzeugung und/oder im Konverterstahlwerk zur Rohstahlerzeugung genutzt werden kann.

Anstelle einer Chemieanlage zur Erzeugung von Produkten aus Synthesegas kann im Rahmen der Erfindung auch eine biotechnologische Anlage (Biotechnologieanlage) eingesetzt werden. Hierbei handelt es sich um eine Anlage zur Fermentation von Synthesegas. Das Synthesegas wird über eine Fermentation biochemisch genutzt, wobei Produkte wie Alkohole (Ethanol, Butanol), Aceton oder organische Säuren hergestellt werden können. Diese Produkte, die durch Fermentation von Synthesegas erzeugt werden, sind im vorliegenden Fall nur beispielhaft genannt.
Der Anlagenverbund kann zusätzlich eine Koksofenanlage aufweisen. Wenn die Roheisenerzeugung und die Rohstahlerzeugung im Verbund mit einer Kokerei betrieben wird, kann eine Teilmenge des bei der Roheisenerzeugung anfallenden Hochofengichtgases und/oder eine Teilmenge des im Konverterstahlwerk angefallenen Konvertergases mit einer Teilmenge des in der Koksofenanlage entstehenden Koksofengases gemischt werden und das Mischgas als Nutzgas verwendet werden. Zur Erzeugung eines Synthesegases beispielsweise für die Ammoniaksynthese kann als Nutzgas eine Mischung aus Koksofengas und Hochofengichtgas oder ein Mischgas aus Koksofengas, Konvertergas und Hochofengichtgas verwendet werden. Zur Herstellung von Kohlenwasserstoffverbindungen eignet sich ein Mischgas aus Koksofengas und Konvertergas oder ein Mischgas aus Koksofengas, Konvertergas und Hochofengichtgas. Dabei sind die beschriebenen Chemieprodukte, die in einer Chemieanlage aus Hochofengichtgas, Konvertergas und Koksofengas hergestellt werden können, nur Anwendungsbeispiele zur Erläuterung der in den Patentansprüchen beschriebenen Verfahrensvarianten.

Die Rohgase - Koksofengas, Konvertergas und/oder Hochofengichtgas - können einzeln oder in Kombinationen als Mischgas aufbereitet und dann als Synthesegas der Chemieanlage zugeführt werden. Die Aufbereitung insbesondere von Kokosofengas umfasst eine Gasreinigung zur Abtrennung störender Inhaltsstoffe, insbesondere Teer, Schwefel und Schwefelverbindungen, aromatischer Kohlenwasserstoffe (BTX) und hochsiedender Kohlenwasserstoffe. Zum Herstellen des Synthesegases ist ferner eine Gaskonditionierung notwendig. Im Rahmen der Gaskonditionierung wird der Anteil der Komponenten CO, CO₂, H₂ innerhalb des Rohgases verändert. Die Gaskonditionierung umfasst beispielsweise eine Druckwechseladsorption zur Abtrennung und Anreicherung von H₂ und/oder eine Wasser-Gas-Shift-Reaktion zur Umwandlung von CO in Wasserstoff und/oder einen Steam-Reformer zur Umwandlung des CH₄-Anteils in CO und Wasserstoff im Koksofengas.

Der Energiespeicher kann im elektrischen Verbund mit einem Kraftwerk betrieben werden, welches als Gasturbinenkraftwerk oder Gasturbinen- und Dampfturbinenkraftwerk ausgelegt ist und zum Zwecke einer Stromerzeugung mit Hochofengichtgas, Konvertergas oder Koksofengas oder einem aus zumindest zwei dieser Gaskomponenten gebildeten Mischgas betrieben wird. Das Kraftwerk und die Chemie- oder Biotechnologieanlage sind in Bezug auf die Gaszuführung parallel geschaltet. Die einerseits dem Kraftwerk und andererseits der Chemie- oder Biotechnologieanlage zugeführten Gasströme sind regelbar.

Unter die Erfindung fällt ferner die Verwendung eines elektrochemischen oder chemischen Energiespeichers zur Einbindung in einen Anlagenverbund zur Stahlerzeugung nach Anspruch 10.

Im Folgenden wird die Erfindung anhand einer lediglich ein Ausführungsbeispiel darstellenden Zeichnung erläutert. Es zeigen schematisch:
- Fig. 1: ein stark vereinfachtes Blockschaltbild eines Anlagenverbundes zur Stahlerzeugung mit einem Hochofen zur Roheisenerzeugung, einem Konverterstahlwerk zur Rohstahlerzeugung, einer Koksofenanlage zur Erzeugung von Koks, einem Energiespeicher, einem Kraftwerk und einer Chemieanlage,
- Fig. 2: das stark vereinfachte Blockschaltbild eines Anlagenverbundes, der zusätzlich zu den in Fig. 1 dargestellten Anlagenkomponenten eine Anlage zur Wasserstofferzeugung aufweist.

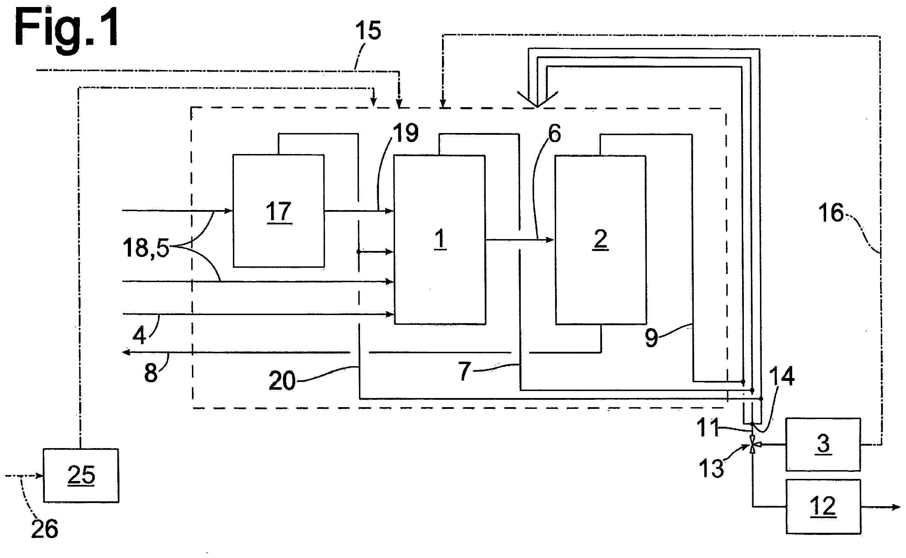

Der in Fig. 1 dargestellte Anlagenverbund zur Stahlerzeugung umfasst einen Hochofen 1 zur Roheisenerzeugung, ein Konverterstahlwerk 2 zur Rohstahlerzeugung und optional eine Koksofenanlage 17 zur Erzeugung von Koks 19, der für die Roheisenerzeugung benötigt wird. Ferner kann ein Kraftwerk 3 vorgesehen sein, das als Gasturbinenkraftwerk oder Gasturbinen- und Dampfturbinenkraftwerk ausgelegt ist und mit einem Gas betrieben wird, welches bei der Roheisenerzeugung, der Rohstahlerzeugung und/oder in der Koksofenanlage anfällt. Zur Führung der Gase ist ein Gasleitungssystem vorgesehen.

Im Hochofen 1 wird im Wesentlichen aus Eisenerz 4 und Reduktionsmitteln 5, insbesondere Koks und Kohle, Roheisen 6 gewonnen. Durch Reduktionsreaktionen entsteht ein Hochofengichtgas 7, welches als Hauptbestandteile Stickstoff, CO, CO₂ und H₂ enthält. Im Konverterstahlwerk 2, das dem Hochofenprozess nachgeschaltet ist, wird Roheisen 6 zu Rohstahl 8 umgewandelt. Durch Aufblasen von Sauerstoff auf das flüssige Roheisen werden störende Verunreinigungen, insbesondere Kohlenstoff, Silizium und Phosphor entfernt. Zur Kühlung kann Schrott in Mengen bis zu 25 % bezogen auf die Roheisenmenge zugeführt werden. Ferner werden Kalk zur Schlackenbildung und Legierungsmittel zugegeben. Am Kopf des Konverters wird ein Konvertergas 9 abgezogen, welches einen sehr hohen Anteil an CO aufweist. Wenn der Anlagenverbund zusätzlich eine Koksofenanlage 17 umfasst, fällt durch Verkokung von Kohle 18 zu Koks 19 außerdem ein Koksofengas 20 an, welches einen hohen Anteil an Wasserstoff und CH₄ enthält. Teile des Koksofengases 20 können für die Beheizung von Winderhitzern im Hochofen 1 genutzt werden. Gemäß einer in Fig. 1 dargestellten Gesamtbilanz wird dem Anlagenverbund Kohlenstoff als Reduktionsmittel 5 in Form von Kohle und Koks sowie Eisenerz 4 zugeführt. Als Produkte fallen Rohstahl 8 und Rohgase 7, 9 an, die sich in Menge, Zusammensetzung und Heizwert und Reinheit unterscheiden und an verschiedenen Stellen im Anlagenverbund wieder eingesetzt werden. Bei einer Gesamtbetrachtung werden 40 bis 50 %, zumeist etwa 45 %, der Rohgase 7, 9 wieder in den Hüttenprozess zur Roheisenerzeugung oder Rohstahlerzeugung zurückgeführt. Zwischen 50 und 60 %, zumeist etwa 55 %, der Rohgase 7, 9 wird der Chemieanlage 12 zugeführt oder kann zum Betrieb des Kraftwerkes 3 genutzt werden. Anstelle der Chemieanlage 12 kann auch eine biotechnologische Anlage vorgesehen sein.

Die Chemieanlage 12 oder biotechnologische Anlage ist an das Gasleitungssystem angeschlossen und hinsichtlich der Gasversorgung parallel zu dem Kraftwerk 3 geschaltet. Das Gasleitungssystem weist eine betrieblich steuerbare Gasweiche 13 zur Aufteilung der dem Kraftwerk 3 und der Chemieanlage 12 oder biotechnologische Anlage zugeführten Gasmengenströme auf. In Strömungsrichtung vor der Gasweiche 13 ist eine Mischvorrichtung 14 zur Herstellung eines aus Hochofengichtgas 7, Konvertergas 9 und/oder Koksofengas 20 bestehenden Mischgases 11 vorgesehen.

Bei dem in Fig. 1 dargestellten Anlagenverbund wird zumindest eine Teilmenge des in dem Anlagenverbund als Hochofengichtgas, Konvertergas und ggf. Kokosofengas anfallenden Rohgases nach einer Gaskonditionierung als Nutzgas zur Herstellung chemischer Produkte verwendet. Zur Deckung des Strombedarfes der Anlagenverbundes wird extern bezogener Strom 15 herangezogen, der zumindest teilweise aus erneuerbarer Energie gewonnen wird und beispielsweise aus Windkraftanlagen, Solaranlagen, Wasserkraftwerken und dergleichen stammt. Zusätzlich kann Kraftwerksstrom 16 eingesetzt werden.

Der Anlagenverbund umfasst einen Energiespeicher 25. Dieser wird mit Strom 26 gespeist, der zumindest teilweise aus erneuerbarer Energie erzeugt wurde, und gibt die gespeicherte Energie zeitversetzt an elektrische Verbraucher des Anlagenverbundes wieder ab. Der Energiespeicher 25 wird ferner im elektrischen Verbund mit dem Kraftwerk 3 betrieben. Zur Erreichung eines kontinuierlichen Betriebes der Anlagen zur Roheisenerzeugung und Rohstahlerzeugung und der Chemieanlage 12 muss Mischgas kontinuierlich als Feed für die Chemieanlage 12 zur Verfügung stehen. Damit der Anlagenverbund im Gegenzug stets die zur Roheisenerzeugung und Rohstahlerzeugung benötige Menge an Strom zur Verfügung hat, wird in Zeiten niedriger Strompreise und ausreichender Verfügbarkeit erneuerbarer Energie elektrische Energie im Energiespeicher 25 gespeichert. Wenn die erneuerbare Energie nicht in ausreichender Menge zu akzeptablen Preisen extern verfügbar ist, wird der benötige Strom aus dem Energiespeicher 25 entnommen. Der Anlagenverbund unter Einbeziehung des Kraftwerks 3 ist so ausgelegt, dass das Kraftwerk 3 im Stand-by Betrieb eingesetzt werden kann und zumindest zeitweise abgeschaltet wird. Das Kraftwerk 3 wird dann eingesetzt, wenn die Chemieanlage 12 außer Betrieb ist oder die gespeicherte Energie nicht ausreicht, um den Betrieb des Anlagenverbundes zu gewährleisten. In diesem Fall wird der Anlagenverbund zumindest teilweise mit Kraftwerksstrom 16 betrieben. Dadurch wird verhindert, dass die Chemieanlage 12 im Teillastbetrieb arbeiten oder ganz heruntergefahren werden muss. Der Energiespeicher 25 ist als chemischer oder elektrochemischer Speicher ausgebildet. Entsprechendes gilt, wenn anstelle der Chemieanlage 12 eine biotechnologische Anlage verwendet wird.

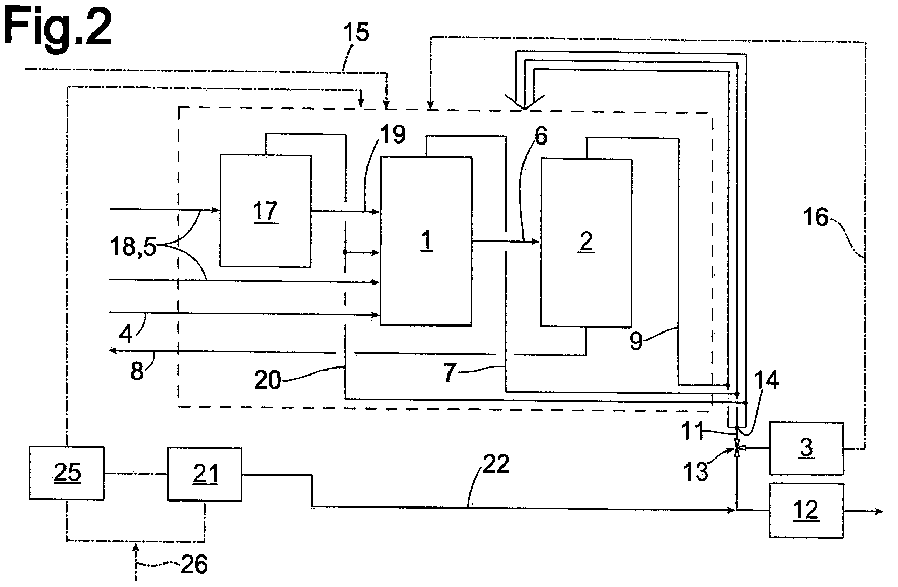

Im Ausführungsbeispiel der Fig. 2 umfasst der Anlagenverbund zusätzlich eine Anlage 21 zur Wasserstofferzeugung, die durch eine wasserstoffführende Leitung 22 mit dem Gasleitungssystem verbunden ist. Die Anlage 21 zur Wasserstofferzeugung kann insbesondere eine Elektrolyseanlage zur Wasserelektrolyse sein. Der Betrieb einer Wasserelektrolyse ist energieintensiv. Zumindest ein Teil der für die Wasserelektrolyse notwendigen elektrischen Energie wird dem Energiespeicher 25 entnommen. Zusätzlich kann externer Strom 26 eingesetzt werden, der vorzugsweise aus regenerativen Quellen stammt. Der durch Wasserelektrolyse erzeugte Wasserstoff wird der Chemieanlage 12 zusammen mit dem Nutzgas als Synthesegas zugeführt. Dadurch kann die Kapazität der Chemieanlage 12 deutlich gesteigert werden. Entsprechendes gilt, wenn anstelle der Chemieanlage 12 eine biotechnologische Anlage vorgesehen wird.

Das Hochofengichtgas 7, das Konvertergas 9 und das Kokosofengas 20 können beliebig miteinander kombiniert werden. Die Kombination der Gasströme 7, 9, 20 richtet sich nach dem gewünschten Synthesegas bzw. dem Produkt, welches in der Chemieanlage 12 oder der biotechnologischen Anlage aus dem Synthesegas hergestellt werden soll.

## Patentansprüche

1. Anlagenverbund zur Stahlerzeugung mit
einem Hochofen (1) zur Roheisenerzeugung,
einem Konverterstahlwerk (2) zur Rohstahlerzeugung und
einem Gasleitungsystem für Gase, die bei der Roheisenerzeugung und/oder der Rohstahlerzeugung anfallen,
**dadurch gekennzeichnet, dass**
der Anlagenverbund zusätzlich eine an das Gasleistungssystem angeschlossene Chemieanlage (12) oder Biotechnologieanlage sowie einen Energiespeicher (25) zur Deckung zumindest eines Teils des Strombedarfs des Anlagenverbundes aufweist, wobei der Anlagenverbund zusätzlich eine Elektrolyseanlage (21) zur Wasserelektrolyse aufweist, wobei die Elektrolyseanlage (21) durch eine Wasserstoffleitung (22) mit der Chemieanlage (12) verbunden ist und mittels einer Sauerstoffrückführeinrichtung (24) an den Hochofen (1) und/oder eine Anlage zur Rohstahlerzeugung oder Rohstahlbehandlung angeschlossen ist, und dass der Energiespeicher (25) zum Zwecke einer Stromversorgung der Elektrolyseanlage (21) elektrisch mit dieser verbunden ist.

2. Anlagenverbund nach Anspruch 1, **dadurch gekennzeichnet, dass** der Energiespeicher (25) als chemischer oder elektrochemischer Speicherausgebildet ist.

3. Anlagenverbund nach einem der Ansprüche 1 bis 2, **dadurch gekennzeichnet, dass** der Anlagenverbund zusätzlich ein Kraftwerk (3) umfasst, welches als Gasturbinenkraftwerk oder Gasturbinen- und Dampfturbinenkraftwerkausgelegt ist und mit einem Gas betrieben wird, welches zumindest eine Teilmenge des bei der Roheisenerzeugung im Hochofen (1) anfallenden Hochofengichtgases und/oder eine Teilmenge des in dem Konverterstahlwerk (2) anfallenden Konvertergases umfasst, und dass das Gasleitungssystem eine schaltbare Gasweiche (13) zur Aufteilung der dem Kraftwerk (3) und der Chemieanlage (12) zugeführten Gasmengenströme aufweist.

4. Verfahren zum Betreiben eines Anlagenverbundes zur Stahlerzeugung, der zumindest einen Hochofen (1) zur Roheisenerzeugung, ein Konverterstahlwerk (2), eine Chemieanlage (12) oder Biotechnologieanlage sowie einen Energiespeicher(25) zur Deckung zumindest eines Teils des Strombedarfes des Anlagenverbundes umfasst,
a) wobei zumindest eine Teilmenge eines bei der Roheisenerzeugung im Hochofen (1) anfallenden Hochofengichtgases und/oder eine Teilmenge eines bei der Rohstahlerzeugung anfallenden Konvertergases nach einer Gaskonditionierung als Nutzgas zur Herstellung chemischer Produkte verwendet wird oder nach einer Gaskonditionierung der Biotechnologieanlage zugeführt und für biochemische Prozesse genutzt wird,
b) wobei der Energiespeicher (25) mit Strom (26) gespeist wird, der zumindest teilweise aus erneuerbarer Energie erzeugt wurde und die gespeicherte Energie zeitversetzt an elektrische Verbraucher des Anlagenverbundes wieder abgibt,
wobei das Nutzgas mit Wasserstoff angereichert wird, welches vorzugsweise in einer Elektrolyseanlage(21) durch Wasserelektrolyse erzeugt wird, und dass zumindest ein Teil der für die Wasserelektrolyse notwendigen elektrischen Energie dem Energiespeicher (25) entnommen wird.

5. Verfahren nach Anspruch 4, **dadurch gekennzeichnet, dass** bei der Wasserelektrolyse (21) anfallender Sauerstoff im Hochofen (1) zur Roheisenerzeugung und/oder im Konverterstahlwerk (2) zur Rohstahlerzeugung oder Rohstahlbehandlung genutzt wird.

6. Verfahren nach einem der Ansprüche 4 bis 5, **dadurch gekennzeichnet, dass5** % bis 60 % der Gasmenge, die bei der Roheisenerzeugung als Hochofengichtgas(7) und im Konverterstahlwerk (2) als Konvertergas (9) anfällt, der Chemieanlage (12) zugeführt und zur Erzeugung chemischer Wertstoffe verwendet wird.

7. Verfahren nach einem der Ansprüche 4 bis 6, **dadurch gekennzeichnet, dass** dem Nutzgas Kokereigas zugemischt wird.

8. Verfahren nach einem der Ansprüche 4 bis 7, **dadurch gekennzeichnet, dass** der Energiespeicher (25) im elektrischen Verbund mit einem Kraftwerk (3)betrieben wird, welches als Gasturbinenkraftwerk oder Gasturbinen- und Dampfturbinenkraftwerk ausgelegt ist und zum Zwecke einer Stromerzeugung mit Hochofengichtgas, Konvertergas oder Kokosofengas oder einem aus zumindest zwei dieser Gaskomponenten gebildeten Mischgas betrieben wird, dass das Kraftwerk (3) und die Chemieanlage (12) oder Biotechnologieanlage in Bezug auf die Gaszuführung parallel geschaltet sind und dass die dem Kraftwerk (3) und der Chemieanlage (12) zugeführten Gasmengenströme geregelt werden.

9. Verfahren nach Anspruch 8, **dadurch gekennzeichnet, dass** das Kraftwerk (3) im Stand-by Betrieb eingesetzt wird und zeitweise abgeschaltet wird.

10. Verwendung eines elektrochemischen oder chemischen Energiespeichers(25) zur Einbindung in einen Anlagenverbund zur Stahlerzeugung, gemäß Anspruch 1, der zumindest einen Hochofen (1) zur Roheisenerzeugung, ein Konverterstahlwerk (2) zur Rohstahlerzeugung und eine mit dem Hochofengichtgas und/oder Konvertergas gespeiste Chemieanlage (12) oder Biotechnologieanlage umfasst.

## Claims

1. Plant complex for steel production comprising a blast furnace (1) for producing pig iron,
a converter steel works (2) for producing crude steel and
a gas-conducting system for gases that occur in the production of pig iron and/or the production of crude steel,
**characterized in that** the plant complex additionally has a chemical plant (12) or biotechnological plant, connected to the gas-conducting system, and also an energy store (25) for covering at least part of the electricity demand of the plant complex, wherein the plant complex additionally has an electrolysis plant (21) for the electrolysis of water, the electrolysis plant (21) being connected to the chemical plant (12) by a hydrogen line (22) and being connected to the blast furnace (1) and/or a plant for producing crude steel or treating crude steel by means of an oxygen return device (24), and wherein, for the purpose of supplying electricity to the electrolysis plant (21), the energy store (25) is electrically connected thereto.

2. Plant complex according to Claim 1, **characterized in that** the energy store (25) is formed as a chemical or electrochemical store.

3. Plant complex according to one of Claims 1 to 2, **characterized in that** the plant complex additionally comprises a power-generating plant (3), which is designed as a gas-turbine power-generating plant or gas-turbine and steam-turbine power-generating plant and is operated with a gas which comprises at least a partial amount of the blast-furnace top gas that occurs in the production of pig iron in the blast furnace (1) and/or a partial amount of the converter gas that occurs in the converter steel works (2), and **in that** the gas-conducting system has a switchable gas diverter (13) for dividing the streams of gas that are fed to the power-generating plant (3) and the chemical plant (12).

4. Method for operating a plant complex for steel production, which comprises at least one blast furnace (1) for producing pig iron, a converter steel works (2), a chemical plant (12) or biotechnological plant and also an energy store (25) for covering at least part of the electricity demand of the plant complex,
a) at least a partial amount of a blast-furnace top gas that occurs in the production of pig iron in the blast furnace (1) and/or a partial amount of a converter gas that occurs in the production of crude steel being used after a gas-conditioning operation as useful gas for producing chemical products or being fed after a gas-conditioning operation to the biotechnological plant and used for biochemical processes,
b) the energy store (25) being fed with electricity (26) that has been produced at least partially from renewable energy and the stored energy being given off again at a later time to electrical loads of the plant complex,
wherein the useful gas is enriched with hydrogen, which is preferably produced in an electrolysis plant (21) by electrolysis of water, and that at least part of the electrical energy necessary for the electrolysis of water is taken from the energy store (25) .

5. Method according to Claim 4, **characterized in that** oxygen that occurs in the electrolysis of water (21) is used in the blast furnace (1) for producing pig iron and/or is used in the converter steel works (2) for producing crude steel or treating crude steel.

6. Method according to one of Claims 4 to 5, **characterized in that** 5% to 60% of the amount of gas that occurs as blast-furnace top gas (7) in the production of pig iron and as converter gas (9) in the converter steel works (2) is fed to the chemical plant (12) and used for producing chemical substances of value.

7. Method according to one of Claims 4 to 6, **characterized in that** coke-oven gas is admixed with the useful gas.

8. Method according to one of Claims 4 to 7, **characterized in that** the energy store (25) is operated in an electrical network with a power-generating plant (3) that is designed as a gas-turbine power generating plant or gas-turbine and steam-turbine power-generating plant and for purposes of producing electricity is operated with blast-furnace top gas, converter gas or coke-oven gas or a mixed gas formed from at least two of these gas components, **in that** the power-generating plant (3) and the chemical plant (12) or biotechnological plant are arranged in parallel with respect to the feeding of gas and **in that** the streams of gas that are fed to the power-generating plant (3) and the chemical plant (12) are controlled.

9. Method according to Claim 8, **characterized in that** the power-generating plant (3) is used in standby mode and at certain times is switched off.

10. Use of an electrochemical or chemical energy store (25) for integration in a plant complex for steel production, according to Claim 1, which comprises at least one blast furnace (1) for producing pig iron, a converter steel works (2) for producing crude steel and a chemical plant (12) or biotechnological plant fed with the blast-furnace top gas and/or converter gas.

## Revendications

1. Installation combinée destinée à la production d'acier, comprenant
un haut fourneau (1) servant à la production de fonte brute,
une aciérie à convertisseur (2) servant à la production d'acier brut et
un système de conduites de gaz pour des gaz qui sont produits lors de la production de fonte brute et/ou de la production d'acier brut,
**caractérisée en ce que**
l'installation combinée possède en plus une installation chimique (12) ou une installation biotechnologique raccordée au système de conduites de gaz ainsi qu'un accumulateur d'énergie (25) servant à couvrir au moins une partie du besoin en électricité de l'installation combinée, l'installation combinée possédant en outre une installation d'électrolyse (21) servant à l'électrolyse de l'eau, l'installation d'électrolyse (21) étant reliée à l'installation chimique (12) par le biais d'une conduite d'hydrogène (22) et raccordée au haut fourneau (1) et/ou à une installation de production d'acier brut ou de traitement d'acier brut au moyen d'un dispositif de retour d'oxygène (24), et l'accumulateur d'énergie (25) étant relié électriquement à l'installation d'électrolyse (21) à des fins d'alimentation électrique de celle-ci.

2. Installation combinée selon la revendication 1, **caractérisée en ce que** l'accumulateur d'énergie (25) est réalisé sous la forme d'un accumulateur chimique ou électrochimique.

3. Installation combinée selon la revendication 1 ou 2, **caractérisée en ce que** l'installation combinée comprend en outre une centrale électrique (3), laquelle est conçue en tant que centrale électrique à turbine à gaz ou centrale électrique à turbine à gaz et turbine à vapeur et fonctionne avec un gaz qui comprend au moins une quantité partielle du gaz de gueule de haut fourneau produit dans le haut fourneau (1) lors de la production de fonte brute et/ou une quantité partielle du gaz de convertisseur produit dans l'aciérie à convertisseur (2), et **en ce que** le système de conduites de gaz possède une aiguille à gaz (13) commutable destinée à répartir les débits volumiques de gaz acheminés à la centrale électrique (3) et à l'installation chimique (12).

4. Procédé pour faire fonctionner une installation combinée servant à la production d'acier, laquelle comprend au moins un haut fourneau (1) servant à la production de fonte brute, une aciérie à convertisseur (2), une installation chimique (12) ou une installation biotechnologique ainsi qu'un accumulateur d'énergie (25) servant à couvrir au moins une partie du besoin en électricité de l'installation combinée,
a) au moins une quantité partielle d'un gaz de gueule de haut fourneau produit dans le haut fourneau (1) lors de la production de fonte brute et/ou une quantité partielle d'un gaz de convertisseur produit lors de la production d'acier brut étant utilisées, après un conditionnement du gaz, en tant que gaz utile pour la production de produits chimiques ou, après un conditionnement du gaz, acheminées à l'installation biotechnologique et utilisées pour des processus biochimiques,
b) l'accumulateur d'énergie (25) étant alimenté en courant (26) qui a été généré au moins partiellement à partir d'énergie accumulée et délivrant de nouveau l'énergie renouvelable avec un décalage dans le temps aux récepteurs électriques de l'installation combinée, le gaz utile étant enrichie avec de l'hydrogène, lequel est de préférence produit dans une installation d'électrolyse (21) par électrolyse de l'eau, et qu'au moins une partie de l'énergie électrique nécessaire pour l'électrolyse de l'eau est prélevée de l'accumulateur d'énergie (25).

5. Procédé selon la revendication 4, **caractérisé en ce que** l'oxygène produit lors de l'électrolyse de l'eau (21) est utilisé dans le haut fourneau (1) pour la production de fonte brute et/ou dans l'aciérie à convertisseur (2) pour la production d'acier brut ou le traitement d'acier brut.

6. Procédé selon l'une des revendications 4 à 5, **caractérisé en ce que** 5 % à 60 % du volume de gaz qui est produit sous forme de gaz de gueule de haut fourneau (7) lors de la production de fonte brute et sous la forme de gaz de convertisseur (9) dans l'aciérie à convertisseur (2) sont acheminés à l'installation chimique (12) et utilisés pour la production de matières de valeur chimiques.

7. Procédé selon l'une des revendications 4 à 6, **caractérisé en ce que** du gaz de cokerie est mélangé au gaz utile.

8. Procédé selon l'une des revendications 4 à 7, **caractérisé en ce que** l'accumulateur d'énergie (25) fonctionne en combinaison électrique avec une centrale électrique (3), laquelle est conçue en tant que centrale électrique à turbine à gaz ou centrale électrique à turbine à gaz et turbine à vapeur et, à des fins d'une génération d'électricité, fonctionne avec du gaz de gueule de haut fourneau, du gaz de convertisseur ou du gaz de four à coke, ou avec un mélange gazeux formé à partir d'au moins deux de ces composantes gazeuses, **en ce que** la centrale électrique (3) et l'installation chimique (12) ou l'installation biotechnologique sont branchées en parallèle en référence à l'arrivée de gaz et **en ce que** les débits volumiques de gaz acheminés à la centrale électrique (3) et à l'installation chimique (12) sont régulés.

9. Procédé selon la revendication 8, **caractérisé en ce que** la centrale électrique (3) est utilisée en mode de veille et temporairement mise hors circuit.

10. Utilisation d'un accumulateur d'énergie (25) électrochimique ou chimique destiné à être intégré dans une installation combinée servant à la production d'acier selon la revendication 1, laquelle comprend au moins un haut fourneau (1) servant à la production de fonte brute, une aciérie à convertisseur (2) servant à la production d'acier brut et une installation chimique (12) ou une installation biotechnologique alimentée avec le gaz de gueule de haut fourneau et/ou le gaz de convertisseur.
